# FASCICULE DE BREVET EUROPEEN

(11) **EP 3 387 691 B1**
(45) Date de publication et mention de la délivrance du brevet: **11.09.2019**
(21) Numéro de dépôt: 16806187.7
(22) Date de dépôt: 09.12.2016
(51) Int. Cl.: H01M 4/24, H01M 4/86, H01M 4/88, H01M 6/14

(54) **ÉLECTRODE COMPOSITE À AIR ET PROCÉDÉ DE FABRICATION ASSOCIÉ**
VERBUND-SAUERSTOFFELEKTRODE UND DEREN HERSTELLUNGSVERFAHREN
COMPOSITE AIR ELECTRODE AND PRODUCTION PROCESS THEREOF

(30) Priorité: 11.12.2015 FR 1562243
(43) Date de publication de la demande: 17.10.2018
(73) Titulaire: Electricité de France, 75008 Paris (FR); Solvay SA, 1120 Bruxelles (BE)
(72) Inventeur: STEVENS, Philippe, 77940 Noisy Rudignon (FR); TOUSSAINT, Gwenaëlle, 77140 Nemours (FR); DESHAYES, Sophie, 77370 Rampillon (FR); PETRICCI, Silvia Rita, 20091 Bresso (Milano) (IT); SRINIVASAN, Padmanabhan, 20129 Milan (IT)
(74) Mandataire: Cabinet Plasseraud
(86) Numéro de dépôt international: PCT/EP2016/080444
(87) Numéro de publication internationale: WO 2017/097982

(56) Documents cités:
- FR-A1- 2 204 902
- US-A- 3 553 024
- US-A- 4 407 907
- US-A- 5 242 765

## Description

### DOMAINE TECHNIQUE

L'invention se rapporte au domaine de la protection de l'électrode à air d'une cellule électrochimique de type métal-air contre les effets corrosifs d'un électrolyte liquide de pH basique. Elle peut notamment trouver application dans les batteries de type zinc-air.

### ARRIÈRE-PLAN TECHNOLOGIQUE

Les cellules électrochimiques se composent généralement d'une électrode négative, d'une électrode positive et d'un électrolyte permettant de faire transiter des porteurs de charge d'une électrode à l'autre.

Les cellules électrochimiques de type métal-air se composent généralement d'un électrolyte liquide. L'électrode négative, typiquement formée à partir d'un composé métallique M, se décompose en ions Mⁿ⁺ lors de la décharge tandis que l'oxygène de l'air est réduit à l'électrode positive, appelée électrode à air, selon les réactions :
Décharge à l'électrode négative : M → Mⁿ⁺ + ne⁻
Décharge à l'électrode positive : O₂ + 2H₂O + 4e⁻ → 4OH⁻

L'un des avantages des systèmes métal-air réside dans l'utilisation d'une électrode positive, également appelée électrode à air, de capacité infinie. L'oxygène consommé à l'électrode positive n'a pas besoin d'être stocké dans l'électrode mais peut être prélevé dans l'air ambiant. Les générateurs électrochimiques de type métal-air sont donc connus pour leurs énergies massiques élevées, pouvant atteindre plusieurs centaines de Wh/kg.

Les électrodes à air sont par exemple utilisées dans des piles à combustible alcalines qui sont particulièrement avantageuses par rapport à d'autres systèmes en raison des cinétiques réactionnelles élevées au niveau des électrodes et en raison de l'absence de métaux nobles tels que le platine.

D'autres cellules métal-air reposent sur l'utilisation d'un métal non alcalin tel que le zinc dans l'électrode métallique négative. Une électrode de zinc est stable dans un électrolyte alcalin. On retrouve des batteries métal-air, et notamment des batteries zinc-air, par exemple dans des prothèses auditives.

Une électrode à air est une structure solide poreuse, généralement en grains de carbone, en contact avec l'électrolyte liquide. L'interface entre l'électrode à air et l'électrolyte liquide est une interface dite « à triple contact » où sont présents simultanément la matière solide active de l'électrode, l'oxydant gazeux, c'est-à-dire l'oxygène de l'air, et l'électrolyte liquide. Une description des différents types d'électrodes à air pour batteries zinc-air est exposée par exemple dans l'article bibliographique de V. Neburchilov et al., intitulé « A review on air cathodes for zinc-air fuel cells », Journal of Power Sources 195 (2010) p. 1271-1291.

L'interface à triple contact d'une électrode à air pose plusieurs défis techniques. En particulier, les électrodes à air se dégradent vite, même hors fonctionnement, notamment en raison de l'effet corrosif de l'électrolyte liquide de pH basique des cellules électrochimiques. Toutefois, malgré cet effet corrosif, il est souhaitable d'augmenter la concentration du composé basique de l'électrolyte (potasse, soude, lithine, etc) pour obtenir des performances encore plus élevées de la cellule métal-air.

En outre, l'électrolyte liquide peut dissoudre le catalyseur dont est constituée l'électrode à air. Les cations provenant de ce catalyseur dissout peuvent contribuer à dégrader les performances d'une cellule métal-air, en favorisant une réaction non désirable de réduction d'eau, de nature à perturber le dépôt de métal sur l'électrode négative, à réduire le rendement coulombien et énergétique, et à consommer l'eau.

En effet, dans une batterie de type zinc-air, du zinc métallique est déposé par réduction électrochimique sur l'électrode négative de la batterie, à partir d'une solution aqueuse d'ions zincate. Il se trouve que le potentiel théorique de réduction d'ion zincate en zinc métal est moins négatif que le potentiel théorique de réduction de l'eau en hydrogène. Les deux réactions peuvent coexister au niveau de l'électrode négative :

| | |
|---|---|
| 2H₂O + 2e⁻ ↔ H₂ + 2 OH⁻ | E°/V = -0.8277 |
| Zn(OH)₄²⁻ + 2e⁻ ↔ Zn + 4OH⁻ | E°/V = -1.199 |

Une surtension sur l'électrode négative de zinc permet de favoriser la réaction de réduction du zincate par rapport à la réduction de l'eau, mais ne suffit pas à empêcher la réduction de l'eau, notamment en présence d'impuretés ioniques issues d'une électrode à air détériorée.

Dans le même temps, la réduction d'oxygène en milieu aqueux peut s'effectuer selon plusieurs réactions :

O₂ + 2H₂O + 4e⁻→ 4OH⁻_{(aq)}

*réduction à 4 électrons*

O₂ + H₂O + 2e⁻→HO₂⁻ + OH⁻_{(aq)}

*réduction à 2 électrons*

HO₂⁻ + H₂O + 2e⁻→ 3OH⁻

2HO₂⁻ → 2OH⁻ + O₂

*réaction de disproportionation*

La réduction à 2 électrons produit du peroxyde comme produit intermédiaire. Or le peroxyde est connu pour dégrader les électrolytes polymères susceptibles d'être utilisés dans une pile à combustible.

Outre l'effet corrosif du composé basique de l'électrolyte liquide, le simple mouillage progressif de la structure poreuse d'une électrode à air, jusqu'à son noyage, finit par rendre inopérante une telle électrode. Ce mouillage est aggravé lors des phases de charge et décharge de la cellule.

Par ailleurs, le gaz carbonique présent dans l'air diffuse dans la solution basique concentrée et se transforme en anion carbonate, qui précipite en présence de cations. La faible solubilité des carbonates formés conduit à une carbonatation progressive de l'électrolyte.

Ces carbonates se forment principalement à l'interface liquide-gaz dans les porosités de l'électrode à air, et sont connus pour favoriser de façon significative le phénomène de noyage. En outre, la précipitation des carbonates dans les porosités de l'électrode à air détruit progressivement l'électrode à air et la rend inopérante.

Du fait de ces différents effets négatifs : noyage de l'électrode à air par l'électrolyte, carbonatation par dissolution de CO₂ dans l'électrolyte, dégradation du catalyseur par l'électrolyte, corrosion de l'électrode par l'électrolyte, tous liés à l'utilisation de l'électrolyte basique, il est recherché une solution permettant de protéger une électrode à air de cet électrolyte basique.

Le document FR0953021 propose de protéger une électrode à air d'une batterie métal-air en utilisant un réseau interpénétré de polymères (RIP) ou bien un réseau semi-interpénétré de polymères (semi-RIP). Le réseau non polymérisé est déposé sur l'électrode à air puis solidifié in situ par polymérisation. La fixation du réseau RIP ou semi-RIP s'effectue grâce à un ancrage du polymère dans les porosités de l'électrode à air sur une épaisseur correspondant typiquement à 2% de l'épaisseur de l'électrode. Bien que ces réseaux forment une membrane de protection de l'électrode contre l'électrolyte liquide, le procédé de fabrication in situ et l'ancrage dans les porosités de l'électrode à air peuvent encore être optimisés. En outre, il a été remarqué qu'une membrane en RIP ou semi-RIP non fluoré présente une faible étanchéité aux électrolytes basiques fortement concentrés, et se dégrade dans un électrolyte comprenant une concentration en ions hydroxyle de l'ordre de ou supérieure à 8 mol/L.

### EXPOSE DE L'INVENTION

Pour répondre aux problèmes exposés ci-avant, la présente invention propose un procédé de fabrication d'une électrode composite destinée à être utilisée dans une cellule électrochimique de type métal-air à électrolyte liquide de pH basique, le procédé comprenant :
- obtenir une structure poreuse comprenant une surface extérieure, la structure poreuse étant configurée pour favoriser une réaction de réduction d'oxygène en ions hydroxyle en présence d'un courant électrique ;
- synthétiser une première solution liquide comprenant un polymère fluoré en suspension dans un solvant, le polymère fluoré étant apte à conduire des ions hydroxyle et à former une membrane étanche au moins à l'électrolyte liquide de pH basique ;
- appliquer au moins une fois la première solution liquide sur la surface extérieure de la structure poreuse, le solvant s'écoulant à travers la structure poreuse et le polymère fluoré se déposant en s'agrégeant sous forme d'une couche sur la surface extérieure de la structure poreuse, formant ainsi ladite membrane étanche de la structure poreuse conductrice d'ions hydroxyle, ladite membrane étant étanche au moins à l'électrolyte liquide de pH basique.

L'invention repose sur un procédé qui n'effectue pas de polymérisation in situ pour constituer une membrane protectrice sur l'électrode à air d'une cellule métal-air. Le procédé de l'invention n'a en outre pas recours à un ancrage du polymère dans les porosités d'une électrode à air. Ceci permet de réduire l'épaisseur de la membrane polymère déposée en surface sans impact sur l'étanchéité de celle-ci. En effet, du fait que le polymère fluoré soit déjà polymérisé, sous forme de suspension dans la première solution liquide, il ne pénètre pas, ou du moins peu, dans les porosités de l'électrode à air et reste préférentiellement piégé sur la surface extérieure de cette dernière, tandis que le solvant de la première solution liquide s'écoule à travers les porosités de l'électrode à air. Le polymère piégé sur la surface extérieure de l'électrode à air s'agrège naturellement pour former une fine couche de protection, étanche à un électrolyte liquide basique. Le choix du polymère fluoré permettant d'obtenir l'effet recherché de conduction d'ions hydroxyle et d'étanchéité peut se porter sur des compositions comme celles décrites dans WO2012/098146.

Par ailleurs, le procédé de la présente invention permet de déposer une couche de polymère plus fine que les procédés de l'art antérieur, sans perdre en étanchéité par rapport à l'électrolyte liquide. Typiquement, l'épaisseur d'une couche protectrice d'électrode a une épaisseur choisie pour constituer un compromis entre un effet barrière à l'électrolyte liquide et une bonne conductance. Une couche protectrice selon l'art antérieur est typiquement recherchée avec une épaisseur suffisamment grande pour ne pas comprendre de trous et former une barrière efficace contre l'électrolyte liquide, bien que ce soit au détriment de la conductance. En effet, la résistivité d'une couche de protection augmente avec l'épaisseur. Le procédé de l'invention favorise l'obtention d'une couche sans trous avec une faible épaisseur, formant ainsi une barrière étanche à l'électrolyte liquide sans rendre la couche de protection plus résistive que les procédés de l'art antérieur.

En formant une telle membrane étanche, l'électrode à air n'est plus exposée directement au milieu basique corrosif de l'électrolyte liquide. Ainsi, les phénomènes de noyage de l'électrode à air et de dissolution du catalyseur de l'électrode à air peuvent être évités.

Un autre effet résultant de ce dépôt sous forme de couche résulte en une réduction du phénomène de carbonatation dans l'électrode composite. Il semblerait en effet que la présence d'une couche du polymère fluoré sur la surface extérieure de l'électrode à air contribue à ralentir la diffusion du CO₂ dans l'électrode. Ceci contribue également à rallonger la durée de vie de l'électrode composite comparé aux électrodes de l'art antérieur.

Le procédé peut en outre comprendre :
- appliquer une seconde fois la première solution liquide sur la surface extérieure de la structure poreuse,
- évaporer le solvant de la première solution liquide appliquée une seconde fois sur la surface extérieure de la structure poreuse.

La réalisation d'une électrode composite selon le procédé décrit ci-avant peut être effectuée en une seule application de la première solution liquide, sans étape d'évaporation du solvant. Lorsque le procédé de formation de l'électrode composite n'implique qu'une seule application de la première solution liquide, le solvant peut s'écouler à travers les porosités de l'électrode à air. Toutefois, lorsque la première solution liquide est appliquée plusieurs fois sur l'électrode à air, typiquement deux ou trois fois, il peut être avantageux de rajouter une étape d'évaporation du solvant. En effet, le solvant peut ne plus s'écouler naturellement à travers les porosités de l'électrode à air, lorsque l'accès à ces porosités est bloqué par la couche de polymère précédemment appliquée.

Selon un mode de réalisation, le procédé comprend en outre, lors de l'obtention de la structure poreuse :
- incorporer du polymère fluoré apte à conduire des ions hydroxyle et à former une membrane étanche au moins à l'électrolyte liquide de pH basique dans une poudre de carbone utilisée pour préparer la structure poreuse,
- obtenir la structure poreuse à partir de la poudre de carbone mélangée au polymère fluoré.

Selon ce mode de réalisation avantageux, la structure poreuse de l'électrode à air comprend le polymère conducteur d'ions hydroxyle et étanche à l'électrolyte liquide réparti dans le volume de l'électrode à air, de préférence uniformément. La structure poreuse de l'électrode composite ainsi obtenue est efficacement protégée contre tout électrolyte basique qui aurait réussi à franchir la membrane recouvrant la surface extérieure de l'électrode à air. Par ailleurs, cette réalisation permet également de réduire considérablement le phénomène de carbonatation dans l'électrode composite. En incorporant du polymère fluoré dans la structure de l'électrode, la réduction du phénomène de carbonatation est encore plus marquée.

L'électrode peut être destinée à une batterie métal-air, en tant qu'électrode positive, le pH de l'électrolyte liquide étant supérieur ou de l'ordre de 14.

Il a notamment été observé que la membrane polymère obtenue selon le procédé décrit ci-avant présente une étanchéité efficace à des électrolytes basiques fortement concentrés, dont le pH est supérieur à 14 et qui peut typiquement atteindre des concentrations en ions hydroxyle supérieures ou de l'ordre de 8 mol/L.

L'invention se rapporte également à une électrode composite destinée à être utilisée dans une cellule électrochimique de type métal-air à électrolyte liquide de pH basique, l'électrode composite comprenant :
- une structure poreuse comprenant une surface extérieure, la structure poreuse étant configurée pour favoriser une réaction de réduction d'oxygène en ions hydroxyle en présence d'un courant électrique ;
- une membrane étanche en polymère fluoré, conductrice d'ions hydroxyle, étanche à l'électrolyte liquide de pH basique, la membrane étant agencée sur la surface extérieure de la structure poreuse sous forme d'une couche, le polymère fluoré ayant une structure polymérisée adaptée pour éviter une pénétration dudit polymère fluoré dans la structure poreuse.

Selon un mode de réalisation, le polymère fluoré de l'électrode composite comprend des groupements SO₂N favorisant la conduction des ions hydroxyle à travers la membrane.

Notamment, le groupement SO₂N peut faire partie d'un groupement SO₂NRQ⁺, dans lequel :
- Q⁺ est un groupement comprenant au moins un atome d'azote quaternaire,
- R est choisi parmi le groupe constitué de : l'hydrogène, un alkyl du groupe C₁-C₂₀, un composé cyclique comprenant le groupement Q+ et entre 2 et 20 atomes de carbone, un composé cyclique comprenant le groupement Q+, entre 2 et 20 atomes de carbone et jusqu'à 4 hétéroatomes.

Le polymère fluoré décrit ci-dessus peut notamment correspondre à ou comprendre un composé tel que celui décrit dans le document WO2012/098146.

Selon un mode de réalisation, le polymère fluoré comprend une chaîne principale fluorée avec des groupements polaires au moins partiellement hydrogénés.

Il a été remarqué, de façon surprenante, qu'un polymère fluoré comprenant une chaîne principale fluorée et des groupements polaires au moins partiellement hydrogénés a la propriété de former naturellement des couches fines par le procédé décrit ci-avant. Selon une possible explication de ce phénomène, fournie à titre illustratif et non limitatif, il semblerait que les groupements polaires au moins partiellement hydrogénés du polymère contribuent à la fois à lier les agrégats de polymère entre eux après application sur la surface extérieure de l'électrode à air, et à se lier à la surface extérieure de l'électrode à air sans pénétrer significativement dans les porosités de cette dernière.

Selon un mode de réalisation, le polymère fluoré comprend en outre au moins un groupement ammonium quaternaire dépourvu d'hydrogène sur une position bêta.

Il a été remarqué qu'en veillant à remplacer l'hydrogène sur la position bêta d'un groupement ammonium quaternaire du polymère fluoré, une stabilité particulièrement grande aux électrolytes fortement basique peut être obtenue.

Selon un mode de réalisation, le polymère fluoré comprend des groupements appartenant à la famille du tétrafluoroéthylène et des groupements sulfurés.

Avantageusement, l'épaisseur de la membrane de protection peut être comprise entre 10 µm et 100 µm.

Une telle épaisseur permet d'obtenir une électrode composite dont la membrane de protection en polymère est à la fois suffisamment étanche à un électrolyte basique, et présentant une résistance mécanique suffisante à la membrane, et conduit suffisamment les ions hydroxyle à travers la membrane. Une bonne résistance mécanique combinée à une bonne conduction ionique confère des performances électriques satisfaisantes à une cellule électrochimique équipée d'une électrode composite selon l'invention.

Selon un mode de réalisation, la structure poreuse comprend un matériau à base de polymère optimisant la conduction d'ions hydroxyle.

Notamment, le matériau à base de polymère de la structure poreuse peut former un réseau interpénétré de polymères ou un réseau semi-interpénétré de polymères.

En combinant les propriétés de conduction des ions hydroxyle de la membrane polymère avec une conduction optimisée d'ions hydroxyle par la structure poreuse de l'électrode à air, les ions hydroxyle peuvent se déplacer plus facilement de l'électrolyte vers la structure poreuse et occuper au mieux tout le volume de l'électrode à air. Il est ainsi possible d'obtenir une électrode à air effectuant une réduction particulièrement efficace de l'oxygène, exploitant au mieux tout le volume de l'électrode.

L'invention se rapporte également à une batterie métal-air comprenant une électrode composite telle que décrite précédemment.

La batterie peut en outre comprendre une électrode négative métallique en zinc et un électrolyte liquide de pH basique supérieur ou de l'ordre de 14.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'une cellule électrochimique de type métal-air comprenant une électrode composite selon l'invention ;
- les figures 2a et 2b sont des représentations schématiques de l'application d'une première solution liquide comprenant un polymère fluoré apte à former une couche étanche à un électrolyte liquide de pH basique sur une structure poreuse ;
- la figure 3 est une représentation schématique d'une électrode composite selon un premier mode de réalisation dans un électrolyte liquide de pH basique élevé, illustrant les propriétés conductrices et d'étanchéité de l'électrode en phase de décharge ;
- la figure 4 est une représentation schématique d'une électrode composite selon un deuxième mode de réalisation en phase de décharge.
- la figure 5 est un graphique comparant la durée de vie en heures sous air ambiant non-traité d'une électrode à air standard de l'art antérieur avec une celle d'une électrode à air composite selon la présente invention, dans deux solutions fortement concentrées en ions hydroxyle.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

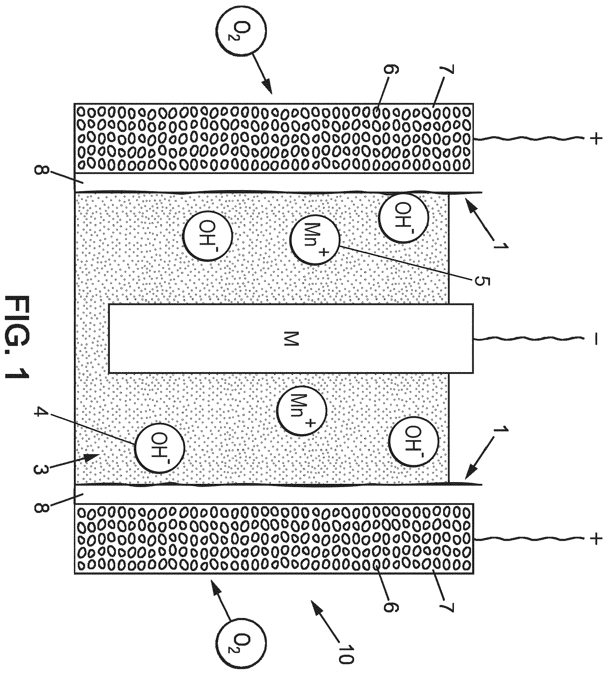

L'invention se rapporte à un procédé permettant de protéger une électrode à air des effets négatifs d'un électrolyte liquide de pH basique. La figure 1 représente une cellule électrochimique 10 de type métal-air comprenant une électrode composite objet de la présente invention, pouvant être obtenue par le procédé présenté ci-après. La cellule représentée sur la figure 1 peut faire partie intégrante d'une batterie métal-air comprenant plusieurs cellules électrochimiques. Une batterie peut également ne comprendre qu'une seule cellule.

Comme représenté sur la figure 1, la cellule électrochimique 10 comprend deux électrodes composites 1, correspondant à des électrodes à air ayant une structure poreuse 7. La structure poreuse 7 d'une électrode à air de cellule électrochimique peut être obtenue à partir de grains de carbone 6 joints à l'aide d'un liant. L'espace entre les grains de carbone 6 permet à l'air et notamment à l'oxygène contenu dans l'air de circuler à travers la structure poreuse 7 jusqu'à une interface triple air/électrode/ions OH⁻. Cette interface triple est le siège de réactions d'oxydation.

La structure poreuse 7 comprend, sur une surface extérieure en regard d'un électrolyte liquide, une membrane 8 étanche à l'électrolyte liquide 3 de pH basique. L'électrolyte liquide peut avantageusement contenir une faible concentration en ions H⁺ et avoir un pH de l'ordre de ou supérieur à 14. En particulier, des valeurs de pH élevées peuvent s'exprimer en concentration d'ions OH⁻. Dans le contexte des cellules électrochimiques métal-air, une forte concentration en ions OH⁻ peut offrir de meilleures performances électriques en permettant à un nombre plus important d'ions OH⁻ d'atteindre le site de réaction au niveau de l'interface triple de la structure poreuse. La membrane 8 recouvrant la surface extérieure de la structure poreuse 7 de l'électrode composite 1 de la figure 1 en regard de l'électrolyte liquide assure une protection de la structure poreuse contre l'électrolyte liquide, même lorsque la concentration on ions OH⁻ est de l'ordre de ou supérieure à 8 mol/L.

L'électrolyte liquide 3 comprend typiquement une forte concentration en ions OH⁻, aussi appelés ions hydroxyles 4 et comprend également des ions métalliques 5 Mⁿ⁺, comme représenté sur la figure 1. Les ions OH⁻ peuvent librement traverser la membrane 8. Toutefois, la membrane 8 est étanche aux autres espèces présentes dans l'électrolyte 3 et en particulier peut avantageusement empêcher un contact direct du liquide électrolytique avec la structure poreuse 7. Ainsi, le phénomène de noyage observé dans les électrodes à air peut être évité tout comme l'effet corrosif de l'électrolyte 3 sur la structure poreuse 7.

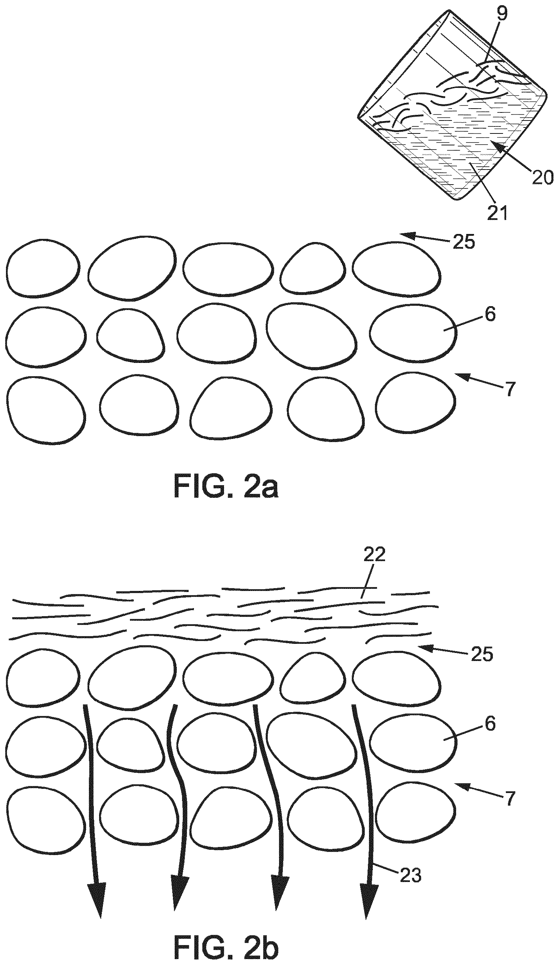

La membrane 8 est constituée d'un polymère fluoré déposé sur la surface extérieure de la structure poreuse 7. Les figures 2a et 2b représentent schématiquement le dépôt du polymère sous forme de couche 22. Cette couche 22 se forme sur la surface extérieure 25 de la structure poreuse 7 sans avoir à pénétrer à l'intérieur des porosités de cette dernière.

Comme représenté schématiquement sur la figure 2a, une première solution liquide 20 est préparée. Cette solution liquide comprend un polymère fluoré 9 en suspension dans un solvant 21. Bien qu'il soit représenté sur la figure 2a comme étant en suspension à la surface de la première solution liquide 20, le polymère fluoré peut également être réparti uniformément dans le solvant 21 tout en étant en suspension. Le polymère fluoré 9 représenté sur la figure 2a est composé de molécules sous forme de chaînes longues de polymère. La représentation sous forme de fibres des figures 2a et 2b illustre le fait que le polymère fluoré 9 est présent dans le solvant 21 sous forme polymérisé. Toutefois, ces chaines de polymère ne forment pas encore à ce stade un ensemble assemblé semi-rigide.

En appliquant la première solution liquide 21 sur la surface extérieure 25 de la structure poreuse 7, le solvant 21 s'écoule à travers les porosités de la structure poreuse 7 entre les grains 6 de carbone, suivant par exemple des chemins 23 tel que représenté sur la figure 2b. Les molécules de structure allongée du polymère fluoré 9 pénètrent difficilement à l'intérieur de la structure poreuse 7. Comme représenté sur la figure 2b, le polymère fluoré 9 est maintenu sur la surface extérieure 25 de la structure poreuse. Ce maintien sur la surface extérieure sans pénétrer dans les porosités de l'électrode à air est lié d'une part à la longueur des chaines du polymère fluoré 9, déjà polymérisé au moment de l'application de la solution liquide sur la structure poreuse, et est lié d'autre part à la composition de la structure poreuse 7 elle-même. En effet, les structures poreuses 7 utilisées dans les cellules électrochimiques de type métal-air comprennent généralement du polytétrafluoréthylène (PTFE). Il a été remarqué que le PTFE semble avoir un effet répulsif sur le polymère fluoré 9, favorisant son maintien sur la surface extérieure 25 d'une électrode à air.

Le dépôt de la première solution liquide 20 sur la surface extérieure 25 de la structure poreuse 7 peut par exemple être effectué par peinture, transfert et peut impliquer l'utilisation d'une raclette pour étaler le polymère.

Lorsque la première solution liquide 20 est appliquée sur la structure poreuse 7, le solvant 21 s'écoule à travers la structure poreuse tandis que les chaines de polymère du polymère fluoré 9 sont filtrées et maintenues sur la surface extérieure 25 de la structure poreuse. Du fait de ce filtrage, les molécules du polymère fluoré ne sont plus dispersées dans le solvant et leur agglomération sur la surface extérieure 25 de la structure poreuse favorise leur agrégation pour former une structure étanche se présentant sous forme d'une couche 22.

Le processus de consolidation de la couche 22 peut s'effectuer sans intervention extérieure une fois que le polymère fluoré 9 est déposé sur la structure poreuse 7. L'agrégation des chaînes de polymère pour constituer la couche 22 peut toutefois être accélérée en exposant la structure de la figure 2b à une température supérieure à la température ambiante.

Il est généralement admis que l'obtention d'une membrane stable et résistante nécessite un mécanisme d'ancrage particulier de la membrane à l'électrode à air. Le procédé de l'invention, qui ne prévoit aucun mécanisme particulier d'ancrage du polymère fluoré 9 dans les porosités de la structure poreuse 7, et qui applique sur une électrode à air un polymère fluoré déjà polymérisé en suspension dans un solvant, propose une solution originale et contre-intuitive à la problématique de la protection d'une électrode à air.

Une possible explication à la stabilité du contact entre la couche 22 et la surface extérieure de la structure poreuse, fournie à titre illustratif et non limitatif, pourrait être attribuée à une adhérence du polymère fluoré 9 à la surface extérieure 25 de la structure poreuse. En effet, du fait de sa structure poreuse, l'électrode à air possède une surface extérieure présentant de nombreuses aspérités augmentant l'aire de cette surface. De faibles forces d'adhérence, telles que les forces de Van der Waals, pourraient fournir une attraction suffisante pour maintenir la couche 22 dans une position fixe en contact avec la structure poreuse 7.

Par ailleurs, il semblerait que les groupements carboxyles typiquement contenus dans les grains 6 de la structure poreuse 7 d'une électrode à air contribuent également à maintenir le polymère fluoré en contact avec la surface extérieure 25.

Le procédé de dépôt du polymère fluoré 9 sur la surface extérieure de la structure poreuse 7 peut être effectué en une seule fois comme illustré schématiquement sur les figures 2a et 2b. Toutefois, il peut également être effectué en plusieurs fois, typiquement deux ou trois fois pour obtenir une épaisseur plus grande de la membrane 8.

Des propriétés de protection particulièrement satisfaisantes contre un électrolyte liquide 3 de pH basique, de concentration en ions hydroxyle 4 supérieure ou de l'ordre de 8 mol/L ont été observées pour des épaisseurs de membrane 8 comprises entre 10 µm et 100 µm. Une telle gamme d'épaisseur permet à la fois d'assurer une étanchéité suffisante à l'électrolyte liquide 3 fortement basique, une conduction efficace des ions hydroxyle 4 à travers la membrane 8, et une résistance mécanique suffisante de la membrane. Il convient de remarquer que le procédé de formation d'une membrane 8 selon l'invention présente l'avantage de favoriser la formation d'une couche étanche de faible épaisseur, sans trous. Ainsi, la membrane 8 obtenue forme une barrière efficace à l'électrolyte liquide tout en bénéficiant d'une conductance qui n'est pas réduite par l'épaisseur de la membrane. En effet, comme évoqué ci-avant, la résistivité d'une membrane augmente avec l'épaisseur. Une réduction de l'épaisseur contribue donc à augmenter la conductance.

Lorsque l'étape de dépôt du polymère fluoré 9 sur la surface extérieure 25 de la structure poreuse 7 est effectuée en plusieurs fois, il se peut que le solvant 21 ne puisse pas totalement s'écouler à travers les porosités de la structure poreuse 7. Plus particulièrement, le solvant s'écoule difficilement à travers la structure poreuse lorsqu'une couche 22 de polymère recouvre déjà la surface extérieure de l'électrode à air. Pour pallier à cette difficulté d'évacuation du solvant 21 excédentaire, une étape supplémentaire d'évaporation du solvant 21 peut être mise en oeuvre après une première application de la première solution liquide. Cette évaporation peut être obtenue en chauffant le solvant, par exemple à des températures comprises entre la température ambiante et 100°C, avantageusement une température de 80°C.

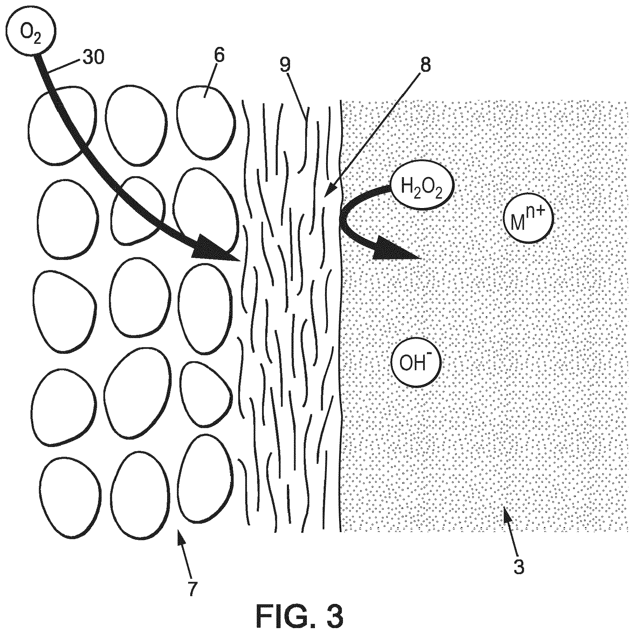

L'électrode composite objet de la présente invention peut avantageusement remplir plusieurs fonctions contribuant à améliorer les performances et la durée d'utilisation d'une électrode à air d'une batterie métal-air. La figure 3 représente schématiquement une portion d'électrode composite d'une cellule métal-air. La structure poreuse 7 comprend sur sa surface extérieure une membrane 8 en polymère fluoré 9, agrégé en une couche étanche à l'électrolyte liquide 3. Toutefois, bien que l'électrolyte liquide 3 soit bloqué par la membrane 8 et ne rentre pas en contact avec la structure poreuse 7, les ions hydroxyles OH⁻ peuvent traverser la membrane 8.

Outre le fait que le polymère fluoré, présent sous forme de couche sur la surface extérieure de la structure poreuse, forme une barrière à l'électrolyte liquide de forte concentration en ions hydroxyles, il a été constaté que cette couche permet également de diminuer le phénomène de carbonatation dans l'électrode composite en empêchant un contact direct entre le CO₂ de l'air et l'électrolyte liquide. Bien que le polymère fluoré ne semble pas avoir intrinsèquement la propriété d'être totalement étanche au gaz carbonique, son utilisation en combinaison avec la structure poreuse de l'électrode à air semble résulter en un ralentissement du phénomène de diffusion du gaz carbonique dans l'électrode composite. Sans être lié à aucune théorie, et à titre non limitatif et purement illustratif, une possible explication à ce constat pourrait être une compétition entre la diffusion d'ions dans le polymère fluoré et la diffusion du gaz carbonique. Lorsque les ions hydroxyles diffusent dans le polymère fluoré, il se pourrait que le gaz carbonique rencontre plus de difficultés à traverser simultanément la couche de polymère fluoré, ce qui crée un effet synergique entre conduction ionique et limitation du phénomène de carbonatation. En outre, la carbonatation ralentie de l'électrolyte liquide, observée en présence d'une couche de polymère fluoré, pourrait être attribuée à la présente de la barrière solide que constitue cette couche sur l'électrode.

Le polymère fluoré est choisi pour posséder de telles propriétés multiples combinant une étanchéité à un électrolyte liquide 3 avec une conduction d'ions hydroxyles. Parmi la famille des polymères fluorés, il a été remarqué que les polymères comprenant des groupements SO₂N présentent des propriétés de conduction d'ions hydroxyle permettant aux batteries métal-air de bénéficier de performances électriques satisfaisantes. En particulier, l'association de groupements SO₂N avec un groupement Q⁺ comprenant au moins un atome d'azote quaternaire, et un radical R a permis d'obtenir une conduction d'ions hydroxyle particulièrement efficace à travers la membrane 8. Dans le composé SO₂NRQ⁺ associé au polymère fluoré 9, le radical R peut typiquement être choisi parmi l'hydrogène, un alkyl du groupe C₁-C₂₀, un composé cyclique comprenant le groupement Q+ et entre 2 et 20 atomes de carbone, un composé cyclique comprenant le groupement Q+, entre 2 et 20 atomes de carbone et jusqu'à 4 hétéroatomes. Des exemples de composés SO₂NRQ⁺ adaptés pour l'électrode composite de la présente invention peuvent être obtenus d'après les méthodes décrites dans le document WO 2012/098146.

Comme expliqué ci-avant, le procédé de dépôt de l'invention permet d'obtenir une membrane protectrice 8 qui adhère à la surface extérieure 25 d'une structure poreuse 7 sans avoir à pénétrer dans les porosités de l'électrode à air pour assurer un ancrage stable à l'électrode. Cette stabilité surprenante permet en outre à l'oxygène d'exploiter un maximum de volume de la structure poreuse pour les réactions d'oxydation. En effet, les ions hydroxyle 4 peuvent librement migrer à travers la membrane 8 comme indiqué par le trajet 40 sur la figure 3, pour atteindre les porosités entre les grains 6 de la structure poreuse 7 où se trouve également de l'oxygène issu de l'air. L'oxygène O₂ peut également migrer librement dans les porosités de l'électrode à air tel qu'indiqué par le trajet 20 sur la figure 3. Les ions hydroxyle et l'oxygène peuvent ainsi interagir en un maximum de sites de réactions dans tout le volume de l'électrode à air. Le volume de réaction disponible pour les réactions d'oxydation n'est limité ni par des phénomènes de noyage, empêché par la présence de la membrane étanche, ni par le polymère fluoré 9 qui n'occupe pas les porosités de l'électrode à air, même dans les parties superficielles de cette dernière.

Par ailleurs, l'effet d'adhérence de la membrane 8 à la surface extérieure 25 de la structure poreuse 7 peut être optimisé lorsque le polymère fluoré 9 comprend une chaîne principale avec au moins un groupement polaire et/ou au moins un groupement au moins partiellement hydrogéné. Des groupements polaires peuvent interagir avec le carbone que contient une électrode à air. De même, la présence de groupements sulfurés sur la chaîne principale du polymère fluoré 9 peut également contribuer à une interaction avec l'électrode à air de nature à favoriser l'organisation du polymère fluoré 9 en une couche sur la surface extérieure 25 d'une structure poreuse 7.

La membrane 8 comprenant le polymère fluoré 9 sous forme de couche possède une résistance plus importante aux électrolytes basiques à forte concentration en ions hydroxyle que les membranes à base de réseaux interpénétrés de polymères ou semi-interpénétrés de polymères tels que ceux décrits dans le document FR0953021. Cette meilleure résistance peut être attribuée à l'adjonction d'une chaine principale comprenant le polymère fluoré, au groupement ammonium quaternaire. En outre, alors que les groupements ammonium quaternaires ne sont pas réputés stables dans des solutions fortement basiques, il a été constaté qu'en utilisant une diamine ne comprenant pas d'hydrogène en position bêta du groupement ammonium quaternaire, une stabilité et une résistance particulièrement satisfaisantes peuvent être obtenues.

Un exemple non limitatif de polymère fluoré qui peut être utilisé dans l'invention est décrit ci-après. Un tel polymère se compose d'une chaîne principale carbonée comprenant des groupements associés à cette dernière par des liaisons covalentes. Ces groupements comprennent eux-mêmes des terminaisons de formule chimique SO₂NRQ⁺ où Q, R sont tels que définis ci-avant.

La chaîne principale fluorée peut être une chaîne polymère linéaire arbitraire comprenant par exemple des motifs répétés de formule chimique : 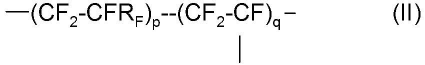 où R_{F} est choisi parmi F, Cl ou -CF₃, et est de préférence choisi comme étant du fluor.

L'élément p de la formule (II) ci-dessus peut être un entier compris entre 0 et 16. L'élément q peut être un entier compris entre 1 et 10 et le quotient p'/q' peut être compris entre 0,5 et 16, p' désignant une valeur moyenne de toutes les valeurs prises par p dans les motifs répétés et q' désignant une valeur moyenne de toutes les valeurs prises par q dans les motifs répétés.

Plus particulièrement, le polymère fluoré peut comprendre des motifs répétés de formule chimique : 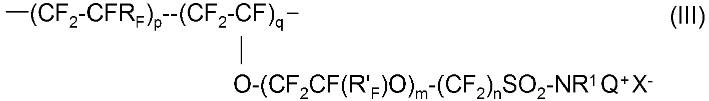 où les terminaisons de formule chimique SO₂NRQ⁺ sont liés de manière covalente à la chaîne principale au moyen des groupements de formule -[O-(CF₂CF(R_{F})O)ₘ-(CF₂)ₙ]-.

L'élément R'_{F} de la formule (III) ci-dessus peut être choisi parmi F, Cl ou -CF₃ et est de préférence choisi comme étant du fluor ou -CF₃. L'élément m peut être un entier égal à 0 ou 1, n peut être un entier compris entre 0 et 10, R¹ est tel que R défini ci-avant, Q+ est tel que défini ci-avant et X⁻ peut être un anion choisi parmi le groupe constitué des anions organiques et des anions inorganiques lipophiles. Lorsque m est égal à 1, n est un entier compris entre 0 et 10, de préférence entre 0 et 6. De préférence, lorsque m est égal à 1, n est égal à 2. Lorsque m est égal à 0, n est un entier compris entre 0 et 10, de préférence entre 2 et 6, et plus particulièrement entre 2 et 4. De préférence, lorsque m est égal à 0, n est égal à 2.

Le polymère fluoré peut être préparé au moyen d'un procédé comprenant :
la réaction d'un polymère fluoré comprenant des groupement à terminaisons de fluorure de sulfonyle avec une amine, pour obtenir des groupements terminaux sulfonamide.

Cette réaction est suivie par une réaction du produit de la réaction précédente avec un agent alkylant pour former un groupement ammonium quaternaire échangeur d'ions.

L'amine peut être écrite sous la formule générique HNR¹Q¹ où R¹ est tel que R défini ci-avant, et Q¹ est un groupement comprenant un précurseur de groupement tertiaire amine du groupement ammonium quaternaire Q+.

Les copolymères comprenant des motifs répétés dérivés de la fluorooléfine de formule chimique CF₂₌CFR_{F}, où R_{F} est choisi parmi F, Cl et -CF₃, ainsi que les copolymères comprenant des motifs répétés dérivés d'au moins un monomère fonctionnel de formule chimique CF₂₌CF-O-(CF₂CF(R'_{F})O)ₘ-(CF₂)ₙSO₂F, où m est un entier égal à 0 ou 1, n est un entier compris entre 0 et 10, sont des composés adaptés à la préparation du polymère fluoré. La fluorooléfine est de préférence du tétrafluoroéthylène.

Par ailleurs, le groupement assurant la conduction des ions dans le polymère peut avoir pour formule chimique : 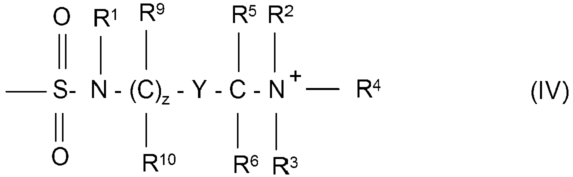 où Y est un groupement aryl C₆-C₁₀, un groupement hétéroaryl ou du CR⁷R⁸, dans lesquels R⁷ est de l'hydrogène, un atome halogène ou un groupement alkyl C₁-C₂₀ ou bien forme une chaîne fermée avec R², R⁵ ou R⁸.

R⁸ est de l'hydrogène, un atome halogène ou un groupement alkyl C₁-C₂₀ ou bien forme une chaîne fermée avec R³, R⁶ ou R⁷. Chaque chaîne formée par R⁷ ou R⁸ contient entre 2 et 10 atomes de carbone et optionnellement 1 à 4 hétéroatomes, et le groupement hétéroaryl comprend entre 5 et 10 atomes dans la chaîne fermée.

R¹ est de l'hydrogène, un groupement alkyl C₁-C₂₀ ou bien forme une chaîne fermée R² ou R⁵, la chaîne fermée comprenant entre 2 et 10 atomes de carbone et entre 1 et 4 hétéroatomes.

R² est un groupement alkyl C₁-C₂₀ ou bien forme une chaîne fermée avec R¹, R³, R⁵, R⁷ ou R⁹, la chaîne fermée contenant entre 2 et 10 atomes de carbone et entre 1 et 4 hétéroatomes tels que des atomes d'azote.

R³ est un groupement alkyl C₁-C₂₀ ou bien forme une chaîne fermée avec R², R⁶, R⁸ ou R¹⁰, la chaîne fermée contenant 2 à 10 atomes de carbone et 1 à 4 hétéroatomes.

R⁴ est un groupement alkyl C₁-C₂₀.

R⁵ est de l'hydrogène, un atome halogène ou un groupement alkyl C₁-C₂₀ ou bien forme une chaîne fermée avec R¹, R², R⁷ ou R⁹, la chaîne fermée contenant 2 à 10 atomes de carbone et optionnellement 1 à 4 hétéroatomes.

R⁶ est de l'hydrogène, un atome halogène ou un groupement alkyl C₁-C₂₀ ou bien forme une chaîne fermée avec R³, R⁸ ou R¹⁰, la chaîne fermée contenant 2 à 10 atomes de carbone et optionnellement 1 à 4 hétéroatomes.

Chaque élément R⁹ peut être de l'hydrogène, un atome halogène un groupement alkyl C₁-C₂₀ ou une chaîne fermée avec R² ou R⁵, la chaîne fermée contenant 2 à 10 atomes de carbone et optionnellement 1 à 4 hétéroatomes.

Chaque élément R¹⁰ peut être de l'hydrogène, un atome halogène ou un groupement alkyl C₁-C₂₀, ou bien former une chaîne fermée avec R³ ou R⁶, la chaîne fermée contenant 2 à 10 atomes de carbone et optionnellement 1 à 4 hétéroatomes.

Z est un entier compris entre 0 et 4, et les structures de chaînes fermées dans le groupement de formule chimique (IV) illustrée ci-dessus peuvent être liées par des ponts à base de groupement alkyl C₁-C₄.

Parmi les amines adaptées à la préparation du polymère fluoré, on trouve les composés ayant pour formule chimique : 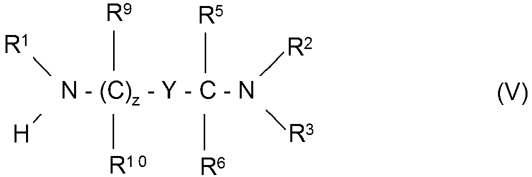 où R¹, R², R³, R⁵, R⁶, R⁹, R¹⁰, Y et z sont tels que définis ci-avant.

Des exemples d'amines selon la formule chimique (V) peuvent être pris parmi les familles de composés suivantes :
α-(dimethylamino)-β,β-dialkyl-ω-aminoalkyls, for example N,N,2,2-tetramethyl-1,3-propanediamine;
N-(ω-aminoalkyl) imidazoles;
2-alkyl-4-ω-aminoalkyl-N,N-dimethylaminobenzyls et 2,6-dialkyl-4-amino-N,N-dimethylaminobenzyls, par exemple 2,6-dimethyl-4-amino-N,N-dimethylbenzylamine;
1-methylpiperazines, mono- et/ou disubstitué pour des groupements akyl en position 2 et/ou 6, par exemple 1,2,6-trimethylpiperazine;
1-(ω-aminoakyl)piperazines, mono- et/ou disubstitué pour des groupements akyl en position 2 et/ou 6;
"de l'aminopiperazine pontée";
1-methyl-4(ω-aminoalkyl)-3,5-alkyl *(mono, di)* piperidines;
1-methyl *(or H)* -2,6 alkyl *(mono, di, tri or tetra)*-4-aminopiperidines,
"de l'aminopiperidine pontée";
1-methyl-3-aminopyrrolidines, optionnellement de l'alkyl substitué en position 2-et/ou 5-, par exemple 3-amino-1-methylpyrrolidine;
4-(ω-aminoalkyl)morpholine, de l'alkyl substitué en position 3 et/ou 5, par exemple 4-(2-aminoethyl) 2,6 dimethyl morpholine;
"aza-aminoadamantanes".

De préférence, l'amine est de la N,N,2,2-tetramethyl-1,3-propanediamine. Ainsi, dans la formule (V) R'=H, R²=R³=CH₃, R⁵=R⁶=R⁹=R¹⁰=H, z=1 et Y=CR⁸R⁹, avec R⁸=R⁹=CH₃.

Le polymère fluoré de la membrane 8 de l'électrode composite 1 présente également une stabilité et résistance à l'effet corrosif du peroxyde d'hydrogène présent dans un électrolyte liquide 3 de pH basique. Il semblerait que la résistance à l'électrolyte liquide de pH basique va de pair avec une résistance au peroxyde d'hydrogène, notamment lorsque ce peroxyde d'hydrogène est présent à une concentration de 5% en masse.

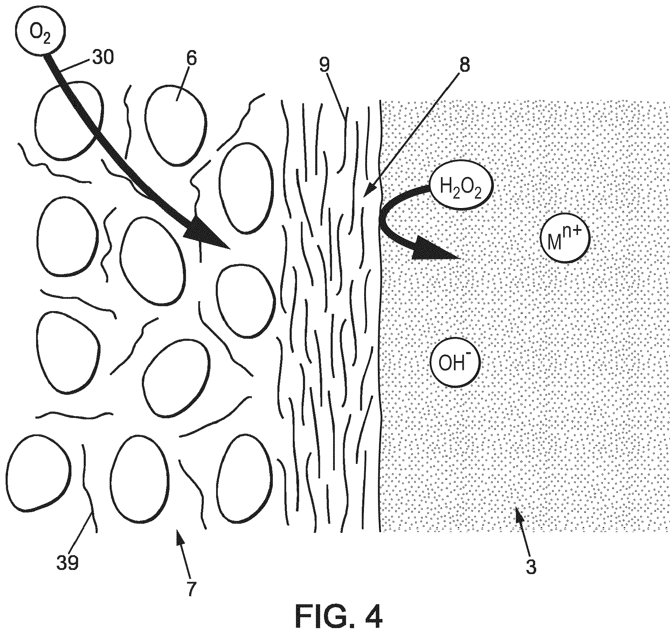

La conduction des ions hydroxyle par la membrane 8 peut être complétée par une meilleure conduction des ions hydroxyles dans la structure poreuse 7 en incorporant un polymère fluoré conducteur d'anions dans la structure de l'électrode à air au moment de sa fabrication. Avantageusement le polymère fluoré utilisé dans l'électrode à air est le même que celui présent dans la membrane 8. La figure 4 illustre une portion d'électrode composite suivant ce second mode de réalisation dans lequel la structure poreuse 7 comprend en outre en son sein des molécules 39 d'un polymère fluoré 9 permettant d'améliorer la conduction d'ions hydroxyles dans le volume de l'électrode à air, et de rendre la structure poreuse 7 elle-même encore plus étanche à tout électrolyte liquide basique qui se retrouverait en contact avec cette structure poreuse.

Les molécules 39 de polymère fluoré font partie intégrante de la structure poreuse 7. Elles peuvent par exemple être incorporées dans l'électrode à air au moment de sa fabrication. La structure poreuse 7 est typiquement obtenue à partir d'une poudre de carbone comprenant des grains 6 qui sont joints par un liant lors d'une étape pouvant par exemple être une étape de frittage. Le polymère fluoré 9, sous forme polymérisée et en suspension dans la première solution liquide, peut être mélangé avec la poudre de carbone lors de la fabrication de l'électrode à air pour assurer une répartition uniforme des molécules 39 dans la structure de l'électrode à air, comme représenté schématiquement sur la figure 4. Par la suite, un polymère fluoré 9 est déposé sous forme de couche sur cette électrode à air comme expliqué ci-avant.

En outre, bien que cette étape supplémentaire ne soit pas représentée, il est possible d'augmenter encore les propriétés de conduction ionique de la structure poreuse 7, dans les deux modes de réalisation représentés sur les figures 3 et 4. En particulier, avant l'application de la première solution liquide pour former la membrane 8, il est possible de prévoir une étape d'application d'une deuxième solution liquide comprenant un réseau interpénétré de polymères ou semi-interpénétré de polymères. Par exemple, les réseaux RIP ou semi-RIP décrits dans le document FR0953021 peuvent être déposés sur la structure poreuse avant la formation de la membrane 8. Cette deuxième solution liquide et les réseaux RIP et semi-RIP sont prévus pour pénétrer à l'intérieur de la structure poreuse. Une fois à l'intérieur de l'électrode à air, une étape d'évaporation est mise en oeuvre pour évaporer le solvant de la deuxième solution liquide et pour permettre une polymérisation effective in situ du réseau RIP ou semi-RIP dans la structure poreuse 7. Ce réseau RIP ou semi-RIP, intégré à la structure poreuse 7 permet d'assurer une meilleure conduction des ions hydroxyle dans l'électrode à air pour acheminer ces ions dans tout le volume dans la structure poreuse.

Il a été observé qu'une électrode composite 1 telle que décrite ci-avant possède une durée de vie environ sept fois plus élevée qu'une électrode à air selon l'art antérieur, et en particulier les électrodes à air d'une batterie zinc-air utilisant de l'air ambiant dont le CO₂ n'a pas été filtré . En outre, les électrodes composites de l'invention sont résistantes dans les électrolytes de basicité élevée avec des concentrations en ions hydroxyle supérieures ou de l'ordre de 8 mol/L rencontrés dans les batteries métal-air, et en particulier les batteries zinc-air.

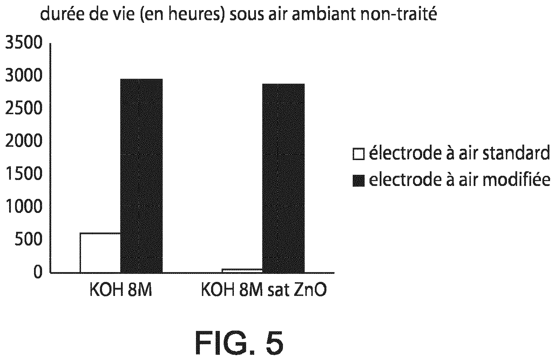

La figure 5 présente sous forme de graphique les résultats d'une expérience comparant la longévité d'une électrode à air selon l'invention à la longévité d'une électrode à air selon l'art antérieur.

La fin de vie des électrodes d'une batterie est caractérisée par une perte d'étanchéité de l'électrode par rapport à l'électrolyte qui se traduit par le passage de l'électrolyte liquide à travers l'électrode.

Sur une électrode à air fonctionnant à une densité de courant constante de 30 mA/cm² avec de l'air ambiant non traité dans un électrolyte liquide composé d'une solution aqueuse de KOH à une concentration 8 molaire on observe est une perte d'étanchéité après 600h de fonctionnement, comme indiqué par le rectangle blanc sur la partie gauche de la figure 5. La même électrode recouverte du polymère selon l'invention perd son étanchéité après 3000h dans les mêmes conditions de test, comme indiqué par le rectangle noir sur la partie gauche de la figure 5.

Sur la partie droite du graphique de la figure 5, la différence entre les deux types d'électrodes est encore plus marquée. Les résultats sur cette partie droite du graphique représentent la durée de vie en heures d'électrodes plongées dans un électrolyte composé d'une solution aqueuse KOH à une concentration en ions hydroxyles de 8 mol/L saturée en ZnO. Dans les mêmes conditions de test que ceux décrit ci-dessus (sous air ambiant non traité à 30 mA/cm²), l'électrode standard sans polymère reste étanche seulement 50h, alors qu'une électrode selon l'invention comprenant un polymère fluoré tel que décrit ci-avant sur sa surface extérieure reste étanche 2900h.

Il va à présent être présenté un exemple de réalisation du polymère fluoré 9 décrit précédemment. Cet exemple est donné à des fins illustratives. Des variantes de réalisation, permettant de conserver les propriétés intéressantes décrites ci-avant, peuvent être réalisées sans difficulté. Des éléments de réalisation complémentaires peuvent être utilisés en s'inspirant des techniques de fabrication décrites dans le document WO 2012/098146.

### Exemples de réalisation d'un polymère fluoré

La synthèse d'un polymère conducteur d'ions hydroxyle et étanche à un électrolyte liquide de pH basique peut notamment comprendre l'utilisation des éléments suivants :
- un précurseur d'acide perfluorosulfonique (PFSA) de la marque Aquivion®PFSA, comprenant des groupements -SO₂F. Le précurseur se présente typiquement sous forme de poudre séchée dans un four sous vide à 70°C pendant 12h,
- un hydrofluoroether séché sur des passoires moléculaires ayant une porosité de 3 Angstrôm,
- du N,N,2,2-tetraméthyl-1,3-propanediammine
- de l'éthanol, du méthanol, de l'isopropanol, de l'acétonitrile,
- de l'iodure de méthyl
- du tosylate de sodium
- du chlorure de sodium.

Dans une premier temps, les composés subissent une réaction d'amidation.

61 grammes de précurseur d'Aquivion®PFSA sont placés dans une fiole contenant 350 g de hydrofluoroether. La fiole est équipée d'un agitateur, d'un entonnoir à robinet, d'une entrée d'azote gazeux et d'une sortie de gaz. Un flux d'azote est maintenu tout au long du processus avec un débit d'environ 1 litre par heure pour maintenir l'ensemble anhydre. La suspension de polymère est agitée à température ambiante pendant environ 2 heures. La fiole est ensuite refroidie à -20°C à l'aide d'une source froide extérieure et, tout en agitant l'ensemble, 60 grammes de N,N,2,2-tetraméthyl-1,3-propanediammine sont rajoutés lentement pendant environ 20 minutes via l'entonnoir à robinet. L'ensemble est agité à une température de -20°C pendant 6 heures supplémentaires. Le polymère est ensuite filtré, lavé avec 150 grammes de hydrofluoroether pendant une heure tout en étant agité, puis traité deux fois avec 200 grammes de méthanol pendant 1 heure tout en étant agité. Le tout est ensuite traité deux fois avec 200 grammes d'une solution comprenant 5% en masse de KOH sous agitation pendant une heure. Le polymère est ensuite séché dans un four sous vide à 70°C pendant 4 heures. 73 grammes de polymère séché sont ainsi obtenus. Un dosage du polymère indique une concentration de 2.0 meq/g.

Une analyse du composé polymère obtenu confirme la présente d'une chaîne principale partiellement fluorée comprenant des dérivés du tétrafluoroéthylène et des composés sulfurés dérivés du CF₂₌CFOCF₂CF₂-SO₂F, c'est-à-dire du perfluoro-5-sulfonylfluoride-3-oxa-1-pentene. La formule représentée ci-dessous illustre une composition chimique du polymère fluoré obtenu. Le terme Rf désigne la chaîne principale partiellement fluorée d'Aquivion®PFSA.

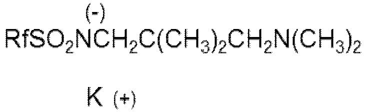

Ensuite, le polymère obtenu subit une réaction d'alkylation conformément à l'exemple présenté ci-après.

70 grammes d'un polymère préparé selon l'exemple précédent et 350 grammes d'un acétonitrile anhydre sont placés dans une fiole équipée d'un agitateur, d'un entonnoir à robinet, d'un condenseur, d'une entrée et d'une sortie d'azote gazeux. Un flux d'azote est maintenu pendant tout le processus avec un débit d'environ 1 litre/heure, afin de maintenir l'ensemble anhydre. La fiole est chauffée à 65°C par une source chaude extérieure et le polymère en suspension est agité pendant 1 heure. Ensuite, 80 grammes d'iodure de méthyl sont ajoutés par l'entonnoir et le mélange est agité pendant 12 heures à 65°C. Après avoir refroidi l'ensemble jusqu'à la température ambiante, le polymère est filtré, lavé avec 250 ml d'acétonitrile pendant une heure sous agitation, puis lavé trois fois avec 250 ml de méthanol pendant 1 heure sous agitation. Le polymère est ensuite séché dans un four sous vide à 70°C pendant 4 heures. 73 grammes de polymère séché sont ainsi obtenus.

Un dosage du polymère indique une concentration en iodure de 0.85 meq/g.

La structure du polymère obtenu à l'issue de cette étape de la préparation se présente sous la formule représentée ci-dessous :

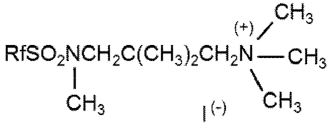

Le terme Rf désigne la chaîne principale partiellement fluorée d'Aquivion®PFSA, décrite ci-avant.

Finalement, l'ensemble subit une réaction de changement d'anion (iodure remplacé par du tosylate).

72 grammes de l'iodure d'ammonium quaternaire préparée selon le protocole décrit ci-avant sont agités pendant 8 heures à 60°C dans un mélange hydro-alcoolique de sel de méthyl tosylate sodium (30 grammes), d'éthanol (300 grammes) et d'eau (300 grammes). Cette opération est répétée deux fois. Un dosage argentométrique réalisé sur les 71 grammes de polymère obtenus après filtrage et lavage permet de montrer que le composé ne présente pas d'iodure résiduel.

Une première solution liquide du polymère fluoré peut ensuite être obtenue selon le protocole décrit ci-après.

51 grammes du polymère obtenu à l'étape décrite précédemment sont placés dans une fiole contenant 200 grammes de N,N-diméthylacétamide et exposés à une température de 80°C pendant 8 heures sous agitation vigoureuse. Après une étape de sonication, la composition liquide est placée dans une centrifugeuse tournant à 3000 tours par minute pendant 15 minutes. Ceci permet de faire apparaitre une petite quantité d'une composition transparente ressemblant à du gel au fond de la fiole. Ce composé polymère représente une concentration de polymère de 19% en masse par rapport au solvant.

Cet exemple décrit une manière d'obtenir la première solution liquide utilisée pour fabriquer une membrane 8 de l'invention. Toutefois, des résultats analogues peuvent être obtenus en utilisant d'autres compositions chimiques qui possèdent des propriétés chimiques décrites précédemment assurant à la fois une bonne conduction des ions hydroxyle et une étanchéité à un électrolyte liquide basique Les propriétés d'étanchéité et de conduction d'une membrane obtenue à partir du composé synthétisé selon l'exemple décrit ci-avant ont été caractérisées dans différentes solutions basiques. En particulier, une membrane de 50 µm d'épaisseur a été préparée à partir de la première solution liquide sur un support spécialement prévu à des fins expérimentales.

La membrane a été traitée avec une solution de KOH de concentration 1 mol/L, dans un mélange eau éthanol de rapport massique 1 :1. La membrane est ensuite lavée avec de l'eau et mise dans une fiole contenant un mélange tel que représenté sur la figure ci-dessous, pendant la durée et aux températures indiquées dans le tableau ci-dessous. À l'issue de chaque test, la membrane est mise dans une solution contenant 100 grammes de chlorure de sodium ayant une concentration de 0,6 mol/L dans un mélange eau-éthanol de rapport massique 1 :1 pendant 24 heures, puis lavée avec de l'eau. La teneur en chlorure est mesurée et indiquée dans le tableau ci-dessous. Le teneur en ions d'une membrane non traitée, servant d'échantillon test, est de 0.8 meq/g.

**Tableau 1 : tests de conduction et stabilité d'une membrane à base de polymère fluoré**

| **solution** | **Température (°C)** | **Durée (jours)** | **Teneur en ions (meq/g)** |
|---|---|---|---|
| **eau** | 25 | 15 | 0.75 |
| **eau** | 80 | 8 | 0.75 |
| **KOH 10 mol/L** | 25 | 30 | 0.72 |
| **KOH 8 mol/L** | 25 | 15 | 0.70 |
| **KOH 8 mol/L + H₂O₂ 5%** | 25 | 15 | 0.72 |
| **LiOH 4 mol/L** | 25 | 15 | 0.75 |
| **LiOH 8 mol/L + H₂O₂ 5%** | 25 | 15 | 0.70 |
| **KOH 8 mol/L** | 45 | 15 | 0.70 |
| **LiOH 4 mol/L** | 60 | 15 | 0.72 |
| **NaOH 2 mol/L** | 80 | 8 | 0.75 |

Les teneurs en ion indiquées dans ce tableau reflètent une stabilité des propriétés d'étanchéité et de conduction de la membrane préparée dans le temps, et une bonne résistance en présence d'un liquide de forte basicité.

La présente invention peut trouver application dans toutes les batteries métal-air utilisant une électrode poreuse à air en guise d'électrode positive. L'invention présente un intérêt particulier pour protéger une électrode à air dans une batterie de type zinc-air, présente de bonnes performances électriques et utilisant généralement des électrolytes liquides à forte concentration en ions hydroxyle.

## Revendications

1. Procédé de fabrication d'une électrode composite (1) destinée à être utilisée dans une cellule électrochimique (10) de type métal-air à électrolyte liquide (3) de pH basique, le procédé comprenant :
- obtenir une structure poreuse (7) d'électrode à air comprenant une surface extérieure (25), la structure poreuse étant configurée pour favoriser une réaction de réduction d'oxygène en ions hydroxyle (4) en présence d'un courant électrique ;
- synthétiser une première solution liquide (20) comprenant un polymère fluoré (9) en suspension dans un solvant (21), le polymère fluoré étant apte à former une membrane (8) étanche au moins à l'électrolyte liquide de pH basique, le polymère fluoré comprenant des groupements SO₂N aptes à conduire des ions hydroxyle ;
- appliquer au moins une fois la première solution liquide sur la surface extérieure de la structure poreuse, le solvant s'écoulant à travers la structure poreuse et le polymère fluoré se déposant en s'agrégeant sous forme d'une couche (22) sur la surface extérieure de la structure poreuse, formant ainsi ladite membrane étanche au moins à l'électrolyte liquide de pH basique et conductrice d'ions hydroxyle.

2. Procédé selon la revendication 1, comprenant en outre :
- appliquer une seconde fois la première solution liquide sur la surface extérieure de la structure poreuse,
- évaporer le solvant de la première solution liquide appliquée une seconde fois sur la surface extérieure de la structure poreuse.

3. Procédé selon l'une quelconque des revendications 1 ou 2, comprenant en outre, lors de l'obtention de la structure poreuse :
- incorporer du polymère fluoré comprenant des groupements SO₂N aptes à conduire des ions hydroxyle et apte à former une membrane étanche au moins à l'électrolyte liquide de pH basique dans une poudre de carbone utilisée pour préparer la structure poreuse,
- obtenir la structure poreuse à partir de la poudre de carbone mélangée au polymère fluoré.

4. Procédé selon l'une quelconque des revendications 1 à 3, dans lequel l'électrode est destinée à une batterie métal-air, en tant qu'électrode positive, le pH de l'électrolyte liquide étant supérieur ou de l'ordre de 14.

5. Electrode composite (1) destinée à être utilisée dans une cellule électrochimique (10) de type métal-air à électrolyte liquide (3) de pH basique, l'électrode composite comprenant :
- une structure poreuse (7) d'électrode à air comprenant une surface extérieure (25), la structure poreuse étant configurée pour favoriser une réaction de réduction d'oxygène en ions hydroxyle en présence d'un courant électrique ;
- une membrane (8) étanche en polymère fluoré (9), le polymère fluoré comprenant des groupements SO₂N aptes à conduire des ions hydroxyle (4), la membrane étant étanche à l'électrolyte liquide de pH basique, la membrane étant agencée sur la surface extérieure de la structure poreuse sous forme d'une couche (22), le polymère fluoré ayant une structure polymérisée adaptée pour éviter une pénétration dudit polymère fluoré dans la structure poreuse.

6. Electrode composite selon la revendication 5 dans laquelle le groupement SO₂N fait partie d'un groupement SO₂NRQ⁺ dans lequel :
- Q⁺ est un groupement comprenant au moins un atome d'azote quaternaire,
- R est choisi parmi le groupe constitué de : l'hydrogène, un alkyl du groupe C₁-C₂₀, un composé cyclique comprenant le groupement Q+ et entre 2 et 20 atomes de carbone, un composé cyclique comprenant le groupement Q+, entre 2 et 20 atomes de carbone et jusqu'à 4 hétéroatomes.

7. Electrode composite selon l'une quelconque des revendications 5 à 6, dans laquelle le polymère fluoré comprend une chaîne principale fluorée avec des groupements polaires au moins partiellement hydrogénés.

8. Electrode composition selon la revendication 7, dans laquelle le polymère fluoré comprend en outre au moins un groupement ammonium quaternaire dépourvu d'hydrogène sur une position bêta.

9. Electrode composite selon l'une quelconque des revendications 5 à 8, dans laquelle le polymère fluoré comprend des groupements appartenant à la famille du tétrafluoroéthylène et des groupements sulfurés.

10. Electrode composite selon l'une quelconque des revendications 5 à 9, dans laquelle une épaisseur de la membrane de protection est comprise entre 10 µm et 100 µm.

11. Electrode composite selon l'une quelconque des revendications 5 à 10, dans laquelle la structure poreuse comprend un matériau à base de polymère optimisant la conduction d'ions hydroxyle.

12. Electrode composite selon la revendication 11, dans laquelle le matériau à base de polymère de la structure poreuse forme un réseau interpénétré de polymères ou un réseau semi-interpénétré de polymères.

13. Batterie métal-air comprenant une électrode composite selon l'une quelconque des revendications 5 à 12.

14. Batterie métal-air selon la revendication 13 comprenant en outre une électrode négative métallique en zinc et un électrolyte liquide de pH basique supérieur ou de l'ordre de 14.

## Patentansprüche

1. Verfahren zur Herstellung einer Verbundelektrode (1) für die Verwendung in einer elektrochemischen Zelle (10) des Metall-Luft-Typs mit flüssigem Elektrolyten (3) mit basischem pH-Wert, wobei das Verfahren Folgendes umfasst:
- Erhalten einer porösen Luftelektrodenstruktur (7), die eine äußere Oberfläche (25) umfasst, wobei die poröse Struktur derart konfiguriert ist, dass eine Reduktionsreaktion von Sauerstoff zu Hydroxylionen (4) in Gegenwart eines elektrischen Stroms begünstigt wird;
- Synthetisieren einer ersten flüssigen Lösung (20), die ein Fluorpolymer (9) in Suspension in einem Lösungsmittel (21) umfasst, wobei das Fluorpolymer eine Membran (8) bilden kann, die mindestens für den flüssigen Elektrolyten mit basischem pH-Wert dicht ist, wobei das Fluorpolymer SO₂N-Gruppen umfasst, die Hydroxylionen leiten können;
- Aufbringen der ersten flüssigen Lösung mindestens einmal auf die äußere Oberfläche der porösen Struktur, wobei das Lösungsmittel, das durch die poröse Struktur fließt, und das Fluorpolymer sich unter Aggregation in Form einer Schicht (22) auf der äußeren Oberfläche der porösen Struktur ablagern, so dass sie die mindestens für den flüssigen Elektrolyten mit basischem pH-Wert dichte und Hydroxylionen leitende Membran bilden.

2. Verfahren nach Anspruch 1, das außerdem Folgendes umfasst:
- ein zweites Mal Aufbringen der ersten flüssigen Lösung auf die äußere Oberfläche der porösen Struktur,
- Verdampfen des Lösungsmittels der ein zweites Mal auf die äußere Oberfläche der porösen Struktur aufgebrachten ersten flüssigen Lösung.

3. Verfahren nach einem der Ansprüche 1 oder 2, das außerdem während des Erhaltens der porösen Struktur Folgendes umfasst:
- Einbringen des Fluorpolymers, das SO₂N-Gruppen umfasst, die Hydroxylionen leiten können, und das eine mindestens für den flüssigen Elektrolyten mit basischem pH-Wert dichte Membran bilden kann, in ein Kohlenstoffpulver, das zur Herstellung der porösen Struktur verwendet wird,
- Erhalten der porösen Struktur aus dem mit dem Fluorpolymer gemischten Kohlenstoffpulver.

4. Verfahren nach einem der Ansprüche 1 bis 3, wobei die Elektrode für eine Metall-Luft-Batterie als positive Elektrode konzipiert ist, wobei der pH-Wert des flüssigen Elektrolyten höher als oder in der Größenordnung von 14 ist.

5. Verbundelektrode (1) für die Verwendung in einer elektrochemischen Zelle (10) des Metall-Luft-Typs mit flüssigem Elektrolyten (3) mit basischem pH-Wert, wobei die Verbundelektrode Folgendes umfasst:
- eine poröse Luftelektrodenstruktur (7), die eine äußere Oberfläche (25) umfasst, wobei die poröse Struktur derart konfiguriert ist, dass eine Reduktionsreaktion von Sauerstoff zu Hydroxylionen in Gegenwart eines elektrischen Stroms begünstigt wird;
- eine dichte Membran (8) aus Fluorpolymer (9), wobei das Fluorpolymer SO₂N-Gruppen umfasst, die Hydroxylionen (4) leiten können, wobei die Membran für den flüssigen Elektrolyten mit basischem pH-Wert dicht ist, wobei die Membran auf der äußeren Oberfläche der porösen Struktur in Form einer Schicht (22) angeordnet ist, wobei das Fluorpolymer eine polymerisierte Struktur besitzt, die dafür ausgelegt ist, das Eindringen des Fluorpolymers in die poröse Struktur zu vermeiden.

6. Verbundelektrode nach Anspruch 5, wobei die SO₂N-Gruppe Teil einer SO₂NRQ⁺-Gruppe ist, worin:
- Q⁺ eine Gruppe ist, die mindestens ein quaternäres Stickstoffatom umfasst,
- R ausgewählt ist aus der Gruppe, bestehend aus: Wasserstoff, einem Alkyl aus der Gruppe C₁-C₂₀, einer cyclischen Verbindung, die die Gruppe Q⁺ und zwischen 2 und 20 Kohlenstoffatome umfasst, einer cyclischen Verbindung, die die Gruppe Q⁺, zwischen 2 und 20 Kohlenstoffatome und bis zu 4 Heteroatome umfasst.

7. Verbundelektrode nach einem der Ansprüche 5 bis 6, wobei das Fluorpolymer eine fluorierte Hauptkette mit zumindest zum Teil hydrierten polaren Gruppen umfasst.

8. Verbundelektrode nach Anspruch 7, wobei das Fluorpolymer außerdem mindestens eine quartäre Ammoniumgruppe ohne Wasserstoff in einer beta-Position umfasst.

9. Verbundelektrode nach einem der Ansprüche 5 bis 8, wobei das Fluorpolymer Gruppen aus der Tetrafluorethylen-Familie und schwefelhaltige Gruppen umfasst.

10. Verbundelektrode nach einem der Ansprüche 5 bis 9, wobei eine Dicke der Schutzmembran zwischen 10 µm und 100 µm beträgt.

11. Verbundelektrode nach einem der Ansprüche 5 bis 10, wobei die poröse Struktur ein Material auf Polymerbasis umfasst, das die Leitung von Hydroxylionen optimiert.

12. Verbundelektrode nach Anspruch 11, wobei das Material auf Polymerbasis der porösen Struktur ein interpenetrierendes Polymernetzwerk oder ein semiinterpenetrierendes Polymernetzwerk bildet.

13. Metall-Luft-Batterie, umfassend eine Verbundelektrode nach einem der Ansprüche 5 bis 12.

14. Metall-Luft-Batterie nach Anspruch 13, die außerdem eine negative Metallelektrode aus Zink und einen flüssigen Elektrolyten mit basischem pH von mehr als oder in der Größenordnung von 14 umfasst.

## Claims

1. A method for manufacturing a composite electrode (1) intended for use in a metal-air electrochemical cell (10) with a liquid electrolyte (3) of basic pH, the method comprising:
- obtaining an air electrode porous structure (7) comprising an outer surface (25), the porous structure being configured to facilitate an oxygen reduction reaction into hydroxyl ions (4) in the presence of an electric current;
- synthesizing a first liquid solution (20) comprising a fluoropolymer (9) suspended in a solvent (21), the fluoropolymer being capable of forming a membrane (8) impermeable to at least the liquid electrolyte of basic pH, the fluoropolymer comprising SO₂N groups capable of conducting hydroxyl ions;
- applying the first liquid solution at least once onto the outer surface of the porous structure, the solvent flowing through the porous structure and the fluoropolymer being deposited by aggregating into a layer (22) on the outer surface of the porous structure, thereby forming said membrane impermeable to at least the liquid electrolyte of basic pH and conductive to hydroxyl ions.

2. Method according to claim 1, further comprising:
- applying the first liquid solution a second time onto the outer surface of the porous structure,
- evaporating the solvent of the first liquid solution applied a second time onto the outer surface of the porous structure.

3. Method according to any one of claims 1 or 2, further comprising, during the obtaining of the porous structure:
- incorporating fluoropolymer comprising SO₂N groups capable of conducting hydroxyl ions and capable of forming a membrane impermeable to at least the liquid electrolyte of basic pH, into a carbon powder used to prepare the porous structure,
- obtaining the porous structure from the carbon powder mixed with the fluoropolymer.

4. Method according to any one of claims 1 to 3, wherein the electrode is intended for a metal-air battery as a positive electrode, the pH of the liquid electrolyte being about 14 or higher.

5. Composite electrode (1) intended for use in a metal-air electrochemical cell (10) with a liquid electrolyte (3) of basic pH, the composite electrode comprising:
- an air electrode porous structure (7) comprising an outer surface (25), the porous structure being configured to facilitate an oxygen reduction reaction into hydroxyl ions in the presence of an electric current;
- an impermeable membrane (8) of fluoropolymer (9), the fluoropolymer comprising SO₂N groups capable of conducting hydroxyl ions (4), the membrane being impermeable to the liquid electrolyte of basic pH, the membrane being arranged on the outer surface of the porous structure in the form of a layer (22), the fluoropolymer having a polymerized structure adapted to prevent penetration of said fluoropolymer into the porous structure.

6. Composite electrode according to claim 5, wherein the SO₂N group is part of a SO₂NRQ⁺ group where:
- Q⁺ is a group comprising at least one quaternary nitrogen atom,
- R is selected from the group consisting of: hydrogen, an alkyl of the C₁-C₂₀ group, a cyclic compound comprising the Q+ group and between 2 and 20 carbon atoms, a cyclic compound comprising the Q+ group, between 2 and 20 carbon atoms, and up to 4 heteroatoms.

7. Composite electrode according to any one of claims 5 to 6, wherein the fluoropolymer comprises a fluorinated backbone chain with polar groups that are at least partially hydrogenated.

8. Composite electrode according to claim 7, wherein the fluoropolymer further comprises at least one quaternary ammonium group with no hydrogen in the beta-position.

9. Composite electrode according to any one of claims 5 to 8, wherein the fluoropolymer comprises groups belonging to the family of tetrafluoroethylene and sulfur groups.

10. Composite electrode according to any one of claims 5 to 9, wherein the thickness of the protective membrane is between 10 µm and 100 µm.

11. Composite electrode according to any one of claims 5 to 10, wherein the porous structure comprises a polymer-based material optimizing the conduction of hydroxyl ions.

12. Composite electrode according to claim 11, wherein the polymer-based material of the porous structure forms an interpenetrating polymer network or a semi-interpenetrating polymer network.

13. Metal-air battery comprising a composite electrode according to any one of claims 5 to 12.

14. Metal-air battery according to claim 13, further comprising a metal negative electrode of zinc and a liquid electrolyte of a basic pH of about 14 or higher.
